# EUROPEAN PATENT APPLICATION

(11) **EP 4 817 765 A1**
(43) Date of publication of application: **07.10.2026**
(21) Application number: 25167476.8
(22) Date of filing: 31.03.2025
(51) Int. Cl.: B22F 10/28, B22F 10/73, B29C 64/153, B29C 64/357, B33Y 10/00, B33Y 30/00, B33Y 40/00, B22F 10/34, B22F 12/90, B29C 64/35, G01N 21/85, G01N 21/88

(54) **A SYSTEM AND METHOD FOR EXTRACTING RAW MATERIAL POWDER SAMPLES FROM A RAW MATERIAL POWDER SUPPLY SYSTEM OF AN ADDITIVE MANUFACTURING MACHINE**

(71) Applicant: Nikon SLM Solutions AG, 23560 Lübeck (DE)
(72) Inventor: Kopschinski, Daniel, 23560 Lübeck (DE)
(74) Representative: Patentanwälte Hemmer Lindfeld Frese Partnerschaft mbB

(57) **Abstract**

The present disclosure relates to a raw material powder sampling system (13, 13a, 13b) for extracting raw material powder samples from a raw material powder supply system (5) of an additive manufacturing machine (1), the raw material powder sampling system (13, 13a, 13b) comprising an powder conveyor (15) for partly extending into a buffer tank (9, 9a, 9b) of the raw material powder supply system (5), wherein the raw material powder sampling system (5) is configured to be selectively operated in a sampling mode or a cleaning mode, wherein the raw material powder sampling system (5) is configured to extract, in the sampling mode, one or more raw material powder samples from the buffer tank (9, 9a, 9b) when the powder conveyor (15) is in an immersed state in which the powder conveyor (15) is partly immersed into the raw material powder within the buffer tank (9, 9a, 9b), and wherein the raw material powder sampling system (5) is configured to move, in the cleaning mode, residual raw material powder from the powder conveyor (15) back into the buffer tank (9, 9a, 9b) when the powder conveyor (15) is in a non-immersed state in which the powder conveyor (15) is not immersed into the raw material powder within the buffer tank (9, 9a, 9b).

## Description

The present disclosure relates to a system and method for extracting raw material powder samples from a raw material powder supply system of an additive manufacturing machine. In particular, the present disclosure relates to an additive manufacturing machine with such a system or executing such a method for custom or serial production at an industrial scale. More particularly, the additive manufacturing machine is preferably configured to apply laser powder bed fusion (LPBF) as the additive manufacturing technique for producing metallic objects.

Additive manufacturing of a three-dimensional object is often referred to as 3D-printing. A specific form of additive manufacturing is laser powder bed fusion (LPBF), in which a layer of raw material powder is exposed to a high energy beam of electromagnetic radiation, such as, for example, a laser beam or a particle beam, for selectively sintering particles of the raw material powder. The three-dimensional object is manufactured by sequentially and selectively sintering layer by layer of raw material powder.

Compared to conventional manufacturing techniques like moulding, additive manufacturing of a three-dimensional objects consumes considerably more time and cost. Therefore, in the early days of 3D-printing, additive manufacturing was only applied for prototyping or for a small number of individual pieces. However, as additive manufacturing offers the possibility to design and produce components that cannot be produced by other conventional manufacturing techniques, there is a demand for using additive manufacturing for custom or serial production at an industrial scale. The development of additive manufacturing over the last decades has reduced the production time and cost to a certain extent, for instance by recirculation raw material powder.

Despite processing steps like sieving and filtering, recirculating raw material powder inevitably introduces an uncertainty about the quality of the raw material powder that is used for additive manufacturing. Therefore, quality management and quality documentation for manufactured three-dimensional objects may require extracting one or more samples of raw material powder for direct analysis or external analysis in a laboratory. For example, EP 3 281 729 B1 describes an additive manufacturing machine with a raw material powder recirculation system having a sampling point. GB 2580723 A also describes a powder handling apparatus with a pipe functioning as a sampler.

However, extracting raw material powder samples from a closed loop raw material powder recirculation system of an additive manufacturing machine is a technical challenge. It is particularly difficult when samples must be retrieved regularly on-the-fly during additive manufacturing without disturbing or slowing down the manufacturing process. Another problem is to retrieve clearly separate samples, i.e. to make sure that for each sample any contaminations from previous sampling are kept below a tolerable level. Finally, different sample sizes may be required for different purposes, so that an adjustable sample size would be beneficial compared to known sampling systems with a fixed sample size.

It is therefore an object of the present disclosure to provide a system and method for extracting raw material powder samples from a raw material powder supply system of an additive manufacturing machine, wherein the samples can be retrieved regularly on-the-fly during additive manufacturing without disturbing or slowing down the production process, wherein the sample size is adjustable, and wherein for each sample any contaminations from previous sampling are kept below a tolerable level.

A solution to this problem is given by the subject-matter of the independent claims. Preferred embodiments can be deduced from the dependent claims, the description and the figures.

According to a first aspect of the present disclosure, a raw material powder sampling system is provided for extracting raw material powder samples from a raw material powder supply system of an additive manufacturing machine, the raw material powder sampling system comprising an powder conveyor for partly extending into a buffer tank of the raw material powder supply system, characterised in that the raw material powder sampling system is configured to be selectively operated in a sampling mode or a cleaning mode, wherein the raw material powder sampling system is configured to extract, in the sampling mode, one or more raw material powder samples from the buffer tank when the powder conveyor is in an immersed state in which the powder conveyor is partly immersed into the raw material powder within the buffer tank, and wherein the raw material powder sampling system is configured to move, in the cleaning mode, residual raw material powder from the powder conveyor back into the buffer tank when the powder conveyor is in a non-immersed state in which the powder conveyor is not immersed into the raw material powder within the buffer tank.

The powder conveyor of the raw material powder sampling system may preferably be an auger conveyor that may have a shaft or may be shaftless. Alternatively, or in addition, the powder conveyor may be a conveyor belt, a chain conveyor and/or a drag conveyor. It is preferable that the powder conveyor, e.g. in form of an auger conveyor, is able to adjust the sample size to any desired value, e.g. by controlling a step motor that drives the rotation of an auger conveyor. Irrespective of the type of powder conveyor, operating the powder conveyor preferably does not interfere with the additive manufacturing process, and preferably does not slow it down. According to the invention, the cleaning mode of the raw material powdersampling system seizes the opportunity of the non-immersed state of the powder conveyor to clean it to a certain degree from residual raw material powder of a previous sampling. This reduces for each sample significantly the risk of contaminations from previous sampling.

It should be noted that the raw material powder supply system of the additive manufacturing machine may preferably be an open, semi-open or closed-loop raw material powder recirculation system configured to supply the process chamber with recycled raw material powder and/or fresh raw material powder and/or mixtures of recycled and fresh raw material powder.

Optionally, the powder conveyor may be inclined with respect to the buffer tank, so that a lower end of the powder conveyor is, in the immersed state of the powder conveyor, immersed in the raw material powder within the buffer tank and an upper end of the powder conveyor is arranged outside of the buffer tank. The inclined arrangement of the powder conveyor has a cleaning effect as such, because residual raw material powder from previous sampling tends to fall back into the buffer tank by gravity. Furthermore, the sample size can be controlled more precisely when the powder conveyor is inclined with respect to the buffer tank.

Optionally, the powder conveyor may be configured to convey, in the sampling mode, in a first direction for conveying a raw material powder sample out of the buffer tank, and to convey, in the cleaning mode, in a second direction being opposite the first direction for conveying residual raw material powder from previous sampling into the buffer tank. Thereby, the residual raw material powder from previous sampling is actively conveyed back into the buffer tank to clean the powder conveyor. The raw material powder sampling system may further comprise a scraping or brushing device to scrape or brush residual raw material powder off the powder conveyor when the powder conveyor conveys in the second direction.

Optionally, the raw material powder sampling system may further comprise an inert gas port, wherein the inert gas port is configured to guide, in the cleaning mode, an inert gas cleaning burst through the powder conveyor into the buffer tank. Such an inert gas cleaning burst may blow along a helix path defined by helically winding powder blades to blow off any residual raw material powder from previous sampling and back into the buffer tank. It is advantageous if the buffer tank is empty or almost empty in the cleaning mode, so that raw material powder is not raised within the buffer tank by the inert gas cleaning burst.

Optionally, the inert gas port may be configured to be arranged at an outside section of the powder conveyor, wherein the outside section of the powder conveyor is arranged outside of the buffer tank. The inert gas port is preferably arranged at an upper end of the inclined powder conveyor and configured to direct an inert gas cleaning burst towards a lower end of the powder conveyor at an inside section of the powder conveyor, wherein the inside section of the powder conveyor is arranged inside the buffer tank.

Optionally, the raw material powder sampling system may be configured to vibrate, in the cleaning mode, the powder conveyor. Such vibrations of the powder conveyor may be helpful to shake off residual raw material powder that may stick at the powder conveyor since previous sampling. The vibrations of the powder conveyor may be induced by switching a drive motor of the powder conveyor to quickly move forth and back. Alternatively, or in addition, the raw material powder sampling system may comprise a dedicated vibration device, e.g. comprising an actuatable hammer, an ultrasound inducer, and/or an unbalanced weight rotator, for causing the powder conveyor to vibrate.

Optionally, the raw material powder sampling system may further comprise a blockage sensor being arranged and configured to detect, in the sampling mode, a blockage of raw material powder within and/or downstream of the powder conveyor. Preferably, the blockage sensor is arranged at a fall pipe downstream of the powder conveyor and upstream of a sample container collecting the conveyed raw material powder sample. For example, in the sampling mode, the conveyed raw material powder sample may fall through a fall pipe from an upper end of the powder conveyor into a sample container passing the blockage sensor on its way down the fall pipe. The blockage sensor may be a photo-electric guard and/or an inductive filling level sensor and/or a capacitive filling level sensor that senses if the fall pipe is filled up with raw material powder.

Optionally, the raw material powder sampling system may further comprise a sample container filling station being arranged downstream of the powder conveyor for filling, in the sampling mode, at least one of the raw material powder samples into one or more sample containers. Preferably, the sample container filling station is arranged at a lower end of a fall pipe, wherein the powder conveyer conveys, in the sampling mode, the raw material powder sample into an upper end of the fall pipe.

Optionally, the sample container filling station may comprise a valve arrangement downstream of the powder conveyor and upstream of the one or more sample containers. The valve arrangement is advantageous to preserve an inert gas atmosphere upstream of the valve arrangement, i.e. in the powder conveyer and the fall pipe. Preferably, the valve arrangement is arranged at or downstream of a lower end of the fall pipe. The valve arrangement allows exchanging sample containers without compromising the inert gas atmosphere in the raw material powder sampling system. The fall pipe may serve as a buffer volume that may fill up in the sampling mode when the valve arrangement is closed for an exchange of sample containers. The blockage sensor may in this case indicate when a maximum filling level of the fall pipe is reached to stop the powder conveyor.

Optionally, the sample container filling station may be configured for automated handling and consecutive automated filling a plurality of sample containers. This is very beneficial if samples must be extracted at a relatively high sampling rate, e.g. 10 or 20 or more samples per build job. Automation of the sampling process reduces working hours and need of staff presence. Furthermore, automatic raw material powder sample labelling that correctly associates a raw material powdersample with a raw material powder batch and with specific build layers of the three-dimensional object is less prone to human error.

According to another aspect of the present disclosure, an additive manufacturing machine is provided comprising:
- a process chamber for selectively sintering a bed of raw material powder to additively manufacture three-dimensional objects,
- a raw material powder supply system having a buffer tank for buffering a supply of raw material powder to the process chamber, and
- a previously described raw material powder sampling system,
wherein the powder conveyor of the raw material powder sampling system comprises an inside section of the powder conveyor that extends into the buffer tank and an outside section of the powder conveyor that extends out of the buffer tank. The raw material powder sampling system may be an integral part of the additive manufacturing machine or a retrofit to an existing additive manufacturing machine. When the raw material powder sampling system is retrofitted, an additional access opening may be cut into the buffer tank for the powder conveyor of the raw material powder sampling system to project with its inside section into the buffer tank.

It should be noted that the raw material powder supply system of the additive manufacturing machine may preferably be an open, semi-open or closed-loop raw material powder recirculation system configured to supply the process chamber with recycled raw material powder and/or fresh raw material powder and/or mixtures of recycled and fresh raw material powder.

Optionally, the buffer tank may be arranged above the process chamber. Preferably, the buffer tank has a separator functionality for separating a conveying inert gas flow from the raw material powder that is transported by the inert gas flow through the raw material powder supply system. The buffer tank may thus comprise a separator in an upper section of the buffer tank and preferably a mass flow funnel shape at a lower section of the buffer tank. The inside section of the powder conveyor of the raw material powder sampling system preferably projects into the lower section of the buffer tank where it can be expected to be regularly at least partly immersed into the raw material powder within the buffer tank.

Optionally, the buffer tank may be configured to be filled and discharged in batches, so that the powder conveyor is at times in an immersed state in which the powder conveyor is partly immersed into the raw material powder within the buffer tank and at other times in a non-immersed state in which the powder conveyor is not immersed into the raw material powder within the buffer tank. The immersed state of the powder conveyor can be used for the sampling mode, whereas the non-immersed state of the powder conveyor can be used for the cleaning mode.

Optionally, the additive manufacturing machine may further comprise an inert gas supply system for providing an inert gas atmosphere in the process chamber and/or in the raw material powder supply system, wherein an inert gas port of the raw material powder sampling system is connected to the inert gas supply system for guiding, in the cleaning mode, an inert gas cleaning burst through the powder conveyor into the buffer tank. Such an embodiment is particularly beneficial, because the inert gas supply system of the additive manufacturing machine can be used for providing the inert gas cleaning burst. There is thus no need for an extra blower or other cleaning means, e.g. brushes. With a small and easy-to-implement adaptation of an existing inert gas supply system, an inert gas cleaning burst of the inert gas supply system can be guided, in the cleaning mode, into the inert gas port of the raw material powder sampling system.

Optionally, the buffer tank may be a first buffer tank of at least two buffer tanks of the raw material powder supply system, wherein the first buffer tank is arranged in the raw material powder supply system upstream of the process chamber, wherein a second buffer tank of the at least two buffer tanks is arranged downstream of the process chamber, wherein the raw material powder sampling system is a first raw material powder sampling system of at least two raw material powder sampling systems, wherein the first raw material powder sampling system is arranged at the first buffer tank and the second raw material powder sampling system is arranged at the second buffer tank. The most interesting location for extracting raw material powder samples is upstream and as close as possible to the process chamber. There, the confidence is highest for the raw material powder sample to truly contain exactly the raw material powder that is currently used for the additive manufacturing of the three-dimensional object. Therefore, the first buffer tank is preferably located directly above and/or within the process chamber. However, for a more detailed quality management, the second raw material powder sampling system at a second buffer tank may be useful for monitoring the quality of the raw material powder along the raw material powder supply system.

According to another aspect of the present disclosure, a method is provided for extracting raw material powder samples from a raw material powder supply system of an additive manufacturing machine, the method comprising:
- filling raw material powder into a buffer tank of the raw material powder supply system, so that an powder conveyor of a raw material powder sampling system is in an immersed state in which the powder conveyor is partly immersed into the raw material powder within the buffer tank,
- operating the raw material powder sampling system in a sampling mode when the powder conveyor is in the immersed state, wherein one or more raw material powder samples are extracted from the buffer tank by the powder conveyor,
- discharging raw material powder out of the buffer tank of the raw material powder supply system, so that the powder conveyor of the raw material powder sampling system is in a non-immersed state in which the powder conveyor is not immersed into the raw material powder within the buffer tank, and
- operating the raw material powder sampling system in a cleaning mode when the powder conveyor is in the non-immersed state, wherein residual raw material powder is moved back from the powder conveyor into the buffer tank.

Optionally, the powder conveyor may be inclined with respect to the buffer tank, so that a lower end of the powder conveyor is, in the immersed state of the powder conveyor, immersed in the raw material powder within the buffer tank and an upper end of the powder conveyor is arranged outside of the buffer tank.

Optionally, the powder conveyor may convey, in the sampling mode, in a first direction for conveying the raw material powder samples out of the buffer tank, and may convey, in the cleaning mode, in a second direction being opposite the first direction for conveying the residual raw material powder into the buffer tank.

Optionally, the method may further comprise blowing, in the cleaning mode, an inert gas cleaning burst through the powder conveyor into the buffer tank.

Optionally, the inert gas cleaning burst may be fed into an inert gas port being arranged at an outside section of the powder conveyor, wherein the outside section of the powder conveyor is arranged outside of the buffer tank.

Optionally, the method may further comprise vibrating, in the cleaning mode, the powder conveyor. Such vibrations of the powder conveyor may be helpful to shake off residual raw material powder that may stick at the powder conveyor since previous sampling. The vibrations of the powder conveyor may be induced by switching a drive motor of the powder conveyor to quickly move forth and back. Alternatively, or in addition, the raw material powder sampling system may comprise a dedicated vibration device, e.g. comprising an actuatable hammer, an ultrasound inducer, and/or an unbalanced weight rotator, for causing the powder conveyor to vibrate.

Optionally, comprising detecting, in the sampling mode, a blockage of raw material powder within and/or downstream of the powder conveyor.

Optionally, the method may further comprise automatically handling and automatically consecutive filling, in the sampling mode, a plurality of sample containers.

Further embodiments of the present disclosure will now be described by way of example with reference to the following figures of which:
- Fig. 1: shows a schematic representation of an example of an additive manufacturing machine according to the present disclosure;
- Fig. 2: shows a schematic representation of an example of a raw material powder sampling system according to the present disclosure, wherein the powder conveyor is in a non-immersed state;
- Fig. 3: shows the raw material powder sampling system of Fig. 2, wherein the powder conveyor is in an immersed state;
- Fig. 4: shows the raw material powder sampling system of Fig. 3, wherein the raw material powder sampling system is being operated in the sampling mode;
- Fig. 5: shows the raw material powder sampling system of Fig. 4, wherein the raw material powder sampling system just finished the sampling mode;
- Fig. 6: shows the raw material powder sampling system of Fig. 5, wherein the raw material powder sampling system is being operated in the cleaning mode;
- Fig. 7: shows another embodiment of a raw material powder sampling system according to the present disclosure, wherein the raw material powder sampling system comprises a container connection monitoring system;
- Fig. 8: shows another example of an additive manufacturing machine according to the present disclosure, wherein the additive manufacturing machine further comprises an automated sample container filling station; and
- Fig. 9: shows an example of an automated sample container filling station of Fig. 8 in more detail.

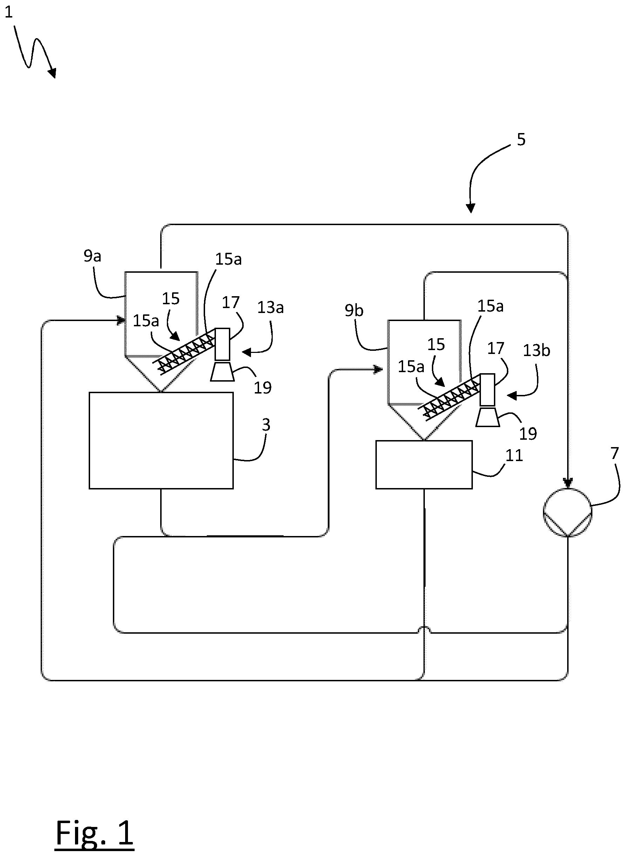

Fig. 1 shows an additive manufacturing machine 1 comprising a process chamber 3 for selectively sintering a bed of raw material powder to additively manufacture a three-dimensional object. The additive manufacturing machine 1 is configured to apply laser powder bed fusion (LPBF) as the additive manufacturing technique for producing metallic objects. In LPBF, a bed of raw material powder is laid out within the process chamber 3 and one or more laser beams are steered across the raw material powder bed to selectively sinter the raw material powder to manufacture the object layer by layer.

As only a fraction of the raw material powder bed is actually sintered to additively manufacture the three-dimensional object, a significant fraction of the raw material powder remains unsintered and is recirculated through a raw material powder supply system 5 of the additive manufacturing machine 1. The raw material powder supply system 5 comprises a piping system through which raw material powder is transported by means of an inert gas flow. The inert gas flow is driven by an inert gas flow pump 7 circulating the inert gas flow through the raw material powder supply system 5. The raw material powder supply system 5 further comprises a first buffer tank 9a and a second buffer tank 9b for buffering the raw material powder within the raw material powdersupply system 5. The first buffer tank 9a is arranged directly above the process chamber 3 for buffering the supply of raw material powder to the process chamber 3. The second buffer tank 9b is arranged downstream of the process chamber to receive unsintered raw material powder from the process chamber 3.

The second buffer tank 9b serves as a separator for separating the inert gas flow and the raw material powder accumulating in the second buffer tank 9b. The raw material powder in the second buffer tank 9b is sieved in a sieve 11 arranged downstream of the second buffer tank 9b. The filtered and sieved unsintered raw material powder leaving the sieve 11 is then recirculated towards the first buffer tank 9a above the process chamber 3.

The first buffer tank 9a also serves as a separator separating the inert gas flow from the raw material powder accumulating in the first buffer tank 9a. The separated inert gas flow from both the first buffer tank 9a and the second buffer tank 9b returns to a suction side of the inert gas flow pump 7.

The additive manufacturing machine 1 further comprises a first raw material powder sampling system 13a and a second raw material powder sampling system 13b. The second raw material powder sampling system 13b is optional. The raw material powder sampling systems 13a,b allow for extracting one or more samples of raw material powder for direct analysis or external analysis in a laboratory. This may be needed for quality management and/or quality documentation with reference to the three-dimensional object produced in the process chamber3. As the first buffer tank 9a accumulates the raw material powder just before it enters the process chamber 3, the first raw material powder sampling system 13a is arranged at the first buffer tank 9a to extract raw material powder samples. In the embodiment shown in Fig. 1, the raw material powder sampling systems 13a,b each comprise an inclined powder conveyor 15, here in form of an auger conveyor, a fall pipe 17 and a releasably connectable sample container 19. The inclined powder conveyor 15 comprises an inside section 15a and an outside section 15b, wherein the inside section 15a of the powder conveyor 15 is arranged in a lower portion of the buffer tank 9a,b preferably having a mass flow funnel shape. The outside section 15b of the powder conveyor 15 protrudes out of the buffer tank 9a,b. Thus, a lower end of the powder conveyor 15 is arranged within the buffer tank 9a,b and an upper end of the powder conveyor 15 leads into an upper end of the fall pipe 17. The sample container 19 is releasably connectable to a lower end of the fall pipe 17.

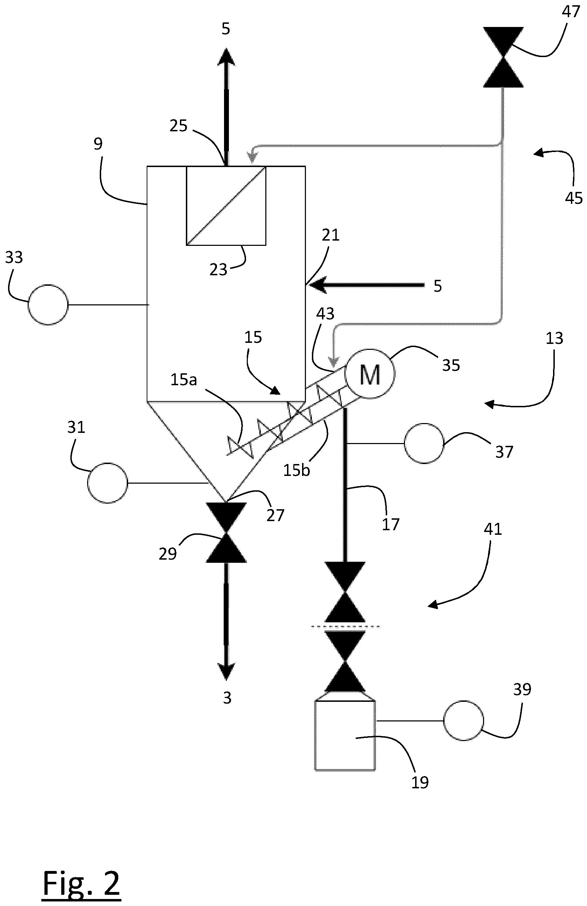

Figs. 2 to 7 show an embodiment of the raw material powder sampling system 13a,b in more detail in different states and operating modes. The Figs. 2 to 7 may apply to the first raw material powder sampling system 13a in combination with the first buffer tank 9a and/or to the second raw material powder sampling system 13b in connection with the second buffer tank 9b. Therefore, Figs. 2 to 7 refer for simplicity more generally to the raw material powder sampling system 13 in combination with the buffer tank 9. In Fig. 2, the buffer tank 9 is empty and ready to receive a dust of raw material powder mixed into an inert gas flow from the raw material powder supply system 5. The dust of raw material powder enters the buffer tank 9 at an inlet port 21. A separator 23 arranged within an upper portion of the buffer tank 9 separates the raw material powder from the inert gas flow, wherein the inert gas flow returns to the raw material powder supply system 5 through inert gas flow exit port 25. The raw material powder accumulates within the buffer tank 9, which has a mass flow funnel shape in a lower portion of the buffer tank 9. The buffer tank 9 comprises a raw material powder outlet port 27 at a bottom of the buffer tank 9. An outlet port valve 29 controls the raw material powder flow towards the process chamber 3.

The buffer tank 9 comprises a first filling level sensor 31 and a second filling level sensor 33. The first filling level sensor 31 is arranged close to the raw material powder outlet port 27 in order to detect a minimum filling level of the buffer tank 9. The second filling level sensor 33 is arranged in the upper portion of the buffer tank 9 in order to detect a maximum filling level of the buffer tank 9. The first filling level sensor 31 may trigger an opening of the inlet port 21 and a closing of the outlet port valve 29, whereas the second filling level sensor 33 may trigger closing of the inlet port 21 and an opening of the outlet port valve 29.

The raw material powder sampling system 13 comprises a controllable step motor 35 for driving the powder conveyor 15 in a desired direction with a certain speed and for a selected time or for a certain rotation angle. At the fall pipe 17, the raw material powder sampling system 13 comprises a blockage sensor 37 to indicate if the fall pipe 17 is filled with raw material powder. The raw material powder sampling system 13 further comprises a filling level sensor 39 for detecting a filling level of the sample container 19 that is releasably connectable to a bottom end of the fall pipe 17. Both, the fall pipe 17 and the sample container 19 can be shut off against the ambient atmosphere by a valve arrangement 41 to preserve an inert gas atmosphere in the fall pipe 17 and/or in the sample container 19 when the sample container 19 is uncoupled from the fall pipe 17.

At the outside section 15b of the powder conveyor 15, the raw material powder sampling system 13 comprises an inert gas port 43 being connected to an inert gas supply system 45 of the additive manufacturing machine 1. Thereby, the inert gas supply system 45 may provide an inert gas cleaning burst that is guided into the powder conveyor 15 through the inert gas port 43. The inert gas supply system 15 may also direct the same or another inert gas cleaning burst into the separator 23 for cleaning the separator 23 within the buffer tank 9.

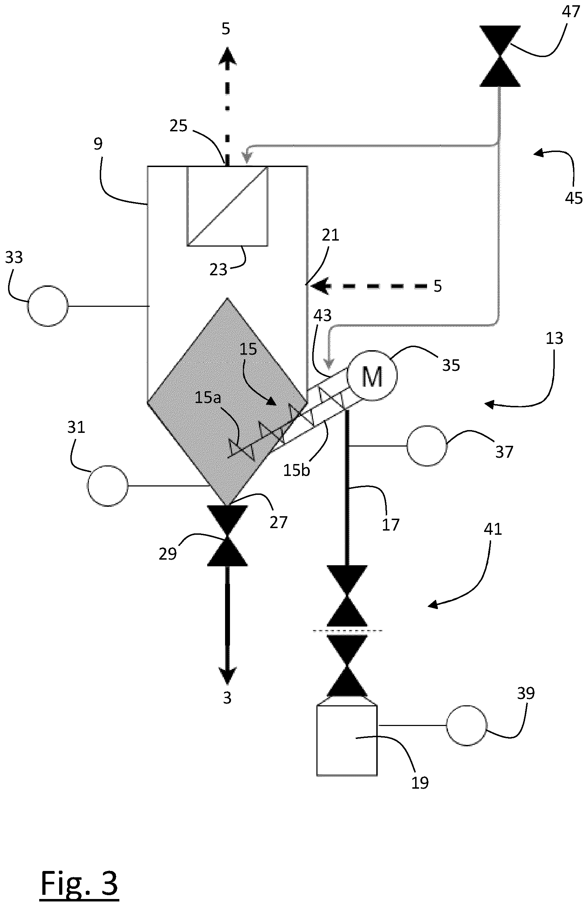

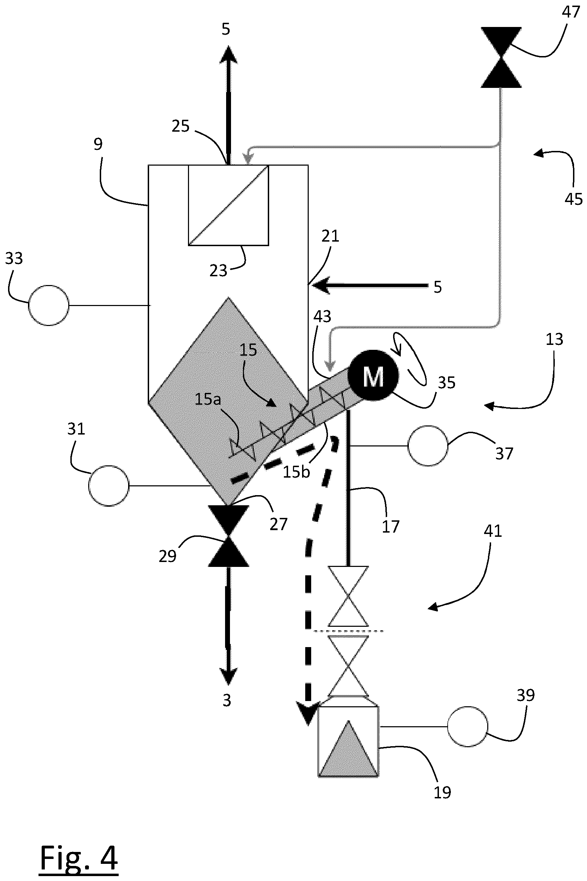

Fig. 3 shows a situation in which the buffer tank 9 is filled to a maximum level with raw material powder (grey shaded) and the second filling level sensor 33 just triggered a closing of the inert port 21, so that no further dust of recirculated raw material powder is fed into the buffer tank 9. The outlet port valve 29 could now in principle be opened to supply the process chamber 3 with raw material powder through the raw material powder outlet port 27. However, before starting the additive manufacturing process in the process chamber 3, one or more raw material powder samples are extracted from the buffer tank 9 as shown in Fig. 4.

Fig. 4 shows the raw material powder sampling system 13 operating in a sampling mode, in which the step motor 35 is controlled to drive the powder conveyor 15 in a first direction, whereby a raw material powder sample is conveyed out of the buffer tank 9 into the fall pipe 17. As the valve arrangement 41 is opened, the connected sample container 19 is filled with the raw material powder sample until the filling level sensor 39 indicates a maximum filling level of the sample container 19.

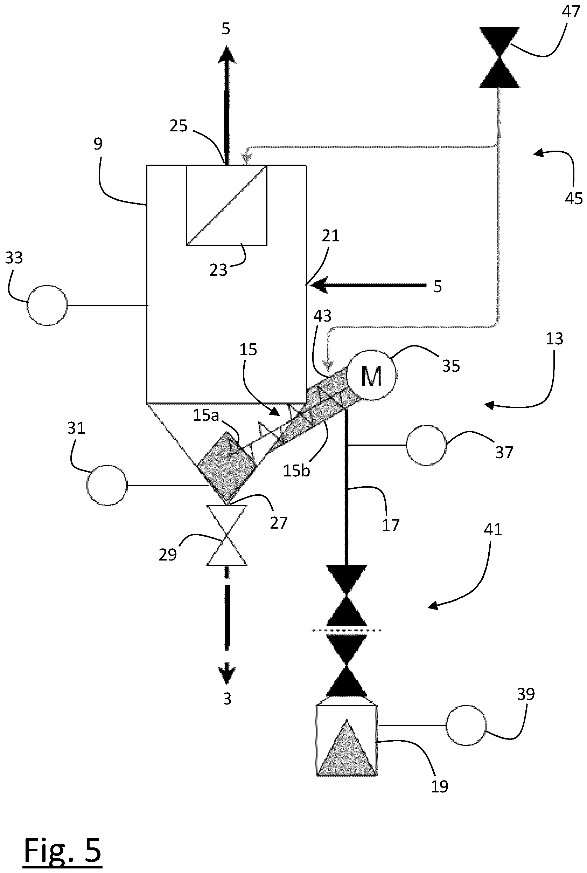

Fig. 5 shows a situation in which the sampling mode of the raw material powder sampling system 13 has stopped and the outlet port valve 29 is opened to supply the process chamber 3 with raw material powder through the raw material powder outlet port 27 for additive manufacturing. During this process, the filling level of the buffer tank 9 falls until the first filling level sensor 31 indicates a minimum filling level. The valve arrangement 41 of the raw material powder sampling system 13 can be closed to allow uncoupling of the sample container 19 for exchange and/or analysis in an external laboratory. As can be seen in Fig. 5, residual raw material powder (grey shaded) of the previous sampling remains in the powder conveyor 15.

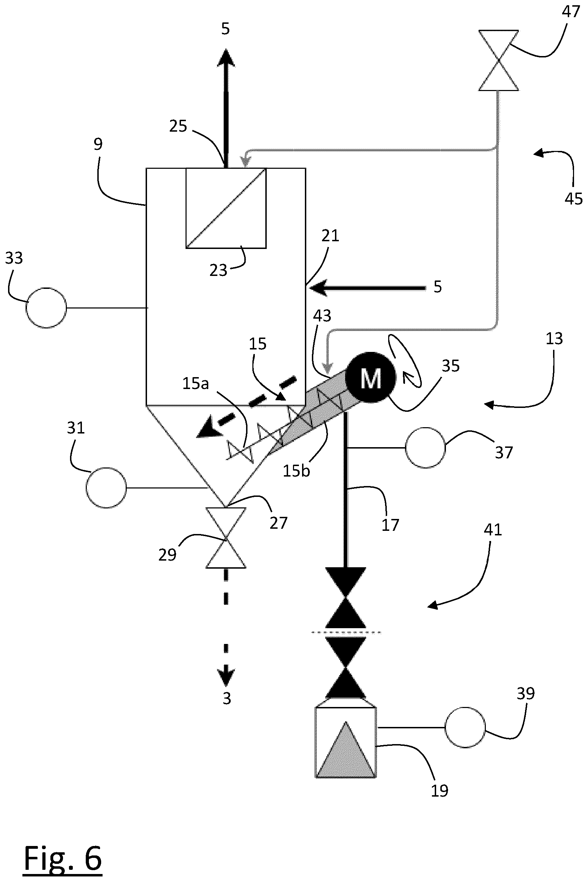

Fig. 6 shows the raw material powder sampling system 13 in a cleaning mode when the inside section of 15a of the powder conveyor 15 is not immersed in the raw material powder within the buffer tank 9 anymore. In Fig. 6, the buffer tank 9 is shown completely empty, so that the powder conveyor 15 is not immersed anymore. In the shown cleaning mode, the step motor 35 is controlled to drive the powder conveyor 15 in a second direction that is opposite to the first direction used during the sampling mode of Fig. 4. Thereby, the powder conveyor 15 moves the residual raw material powder from the previous sampling back into the buffer tank 9. Thereby, for extracting subsequent raw material powder samples, the risk of contaminations from previous sampling is significantly reduced. After the cleaning mode shown in Fig. 6, the process may in principle repeat with refilling the buffer tank 9 as shown in Fig. 2. However, in order to improve the cleaning effect of the powder conveyor 15, an inert gas supply valve 47 of the inert gas supply system 45 is opened to guide an inert gas cleaning burst via the inert gas port 43 through the powder conveyor 15 into the buffer tank 9. The same or a different inert gas cleaning burst is guided through the separator 23 to clean the separator. The inert gas cleaning burst blows the powder conveyor 15 clean.

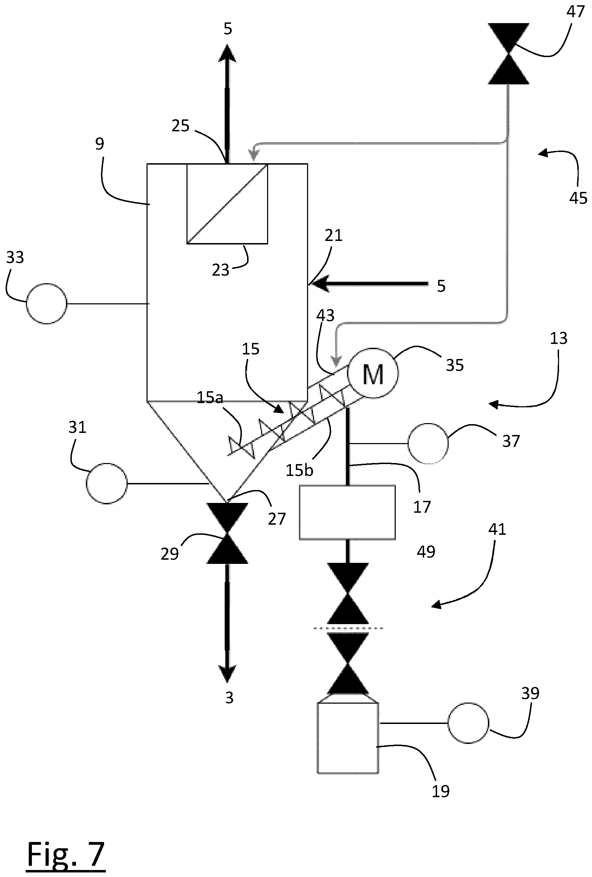

Fig. 7 shows the same situation as shown in Fig. 2 when the buffer tank 9 is ready to be filled with raw material powder. The embodiment shown in Fig. 7, however, differs from the embodiment shown in Figs. 2 to 6 by a container connection monitoring system 49 of the raw material powder sampling system 13. The container connection monitoring system 49 may monitor and alert if a sample container 19 is not properly coupled to the fall pipe 17. Alternatively, or in addition, the container connection monitoring system 49 may veto operating the raw material powder sampling system in the sampling mode as long as no sample container 19 is properly connected to the fall pipe 17.

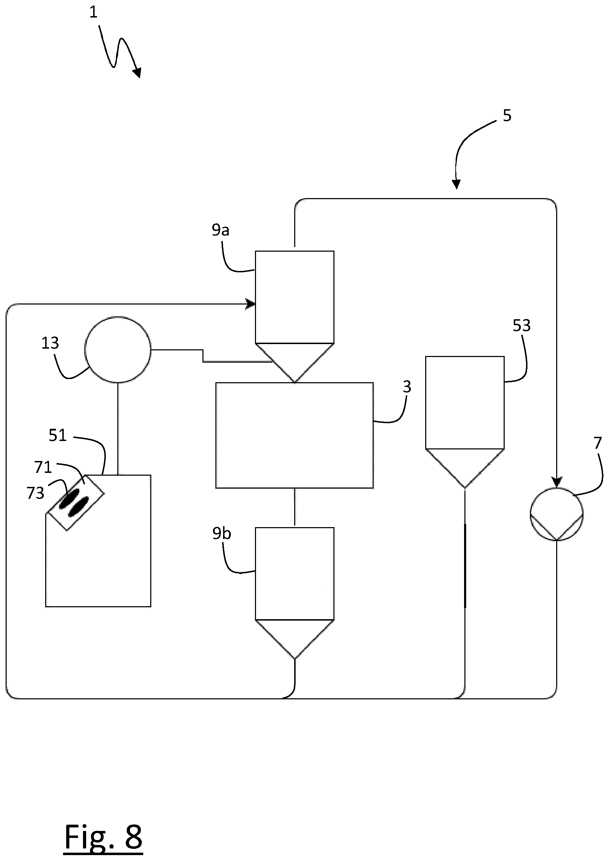

Fig. 8 shows another embodiment of an inventive additive manufacturing machine 1 comprising an automated sample container filling station 51. Furthermore, the embodiment shown in Fig. 8 comprises a raw material powder supply tank 53 for adding fresh or recycled raw material powder into the raw material powder supply system 5 of the additive manufacturing machine 1. The automated sample container filling station 51 is particularly advantageous for extracting a plurality of raw material powder samples during additive manufacturing as efficiently as possible. For example, quality management may require extracting raw material powder samples every 25 litres of raw material powder getting into the buffer tank 9. This can lead to a plurality of samples per build job of a three-dimensional object. Manual handling of the sample containers would require almost constant presence of staff. The sample container filling station 51 facilitates the handling of a plurality of sample containers 19. Furthermore, automatic raw material powder sample labelling that correctly associates a raw material powder sample with a raw material powder bed and with specific build layers of the three-dimensional objects is less prone to human error.

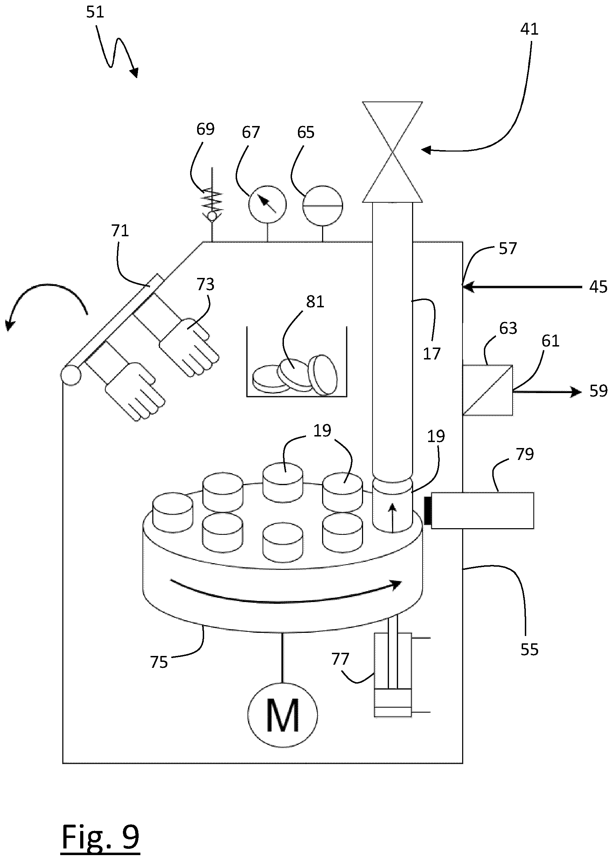

Fig. 9 shows an embodiment of the sample container filling station 51 in more detail. The sample container filling station 51 comprises an enclosure 55, in which an inert gas atmosphere is to be ensured. The enclosure 55 may comprise an inert gas inlet port 57 being connected to the inert gas supply system 45 for flooding the enclosure 55 with an inert gas atmosphere. Prevailing gas in the enclosure 55 may be exhausted to an ambient environment 59 via outlet port 61. An exhaust filter 63 filters the exiting gas atmosphere before it is exhausted to the ambient environment 59 via the outlet port 61. An oxygen sensor 65 can be used to monitor the oxygen content of the atmosphere within the enclosure 55. Alternatively, or in addition, a pressure sensor 67 can be used to keep the pressure within the enclosure 55 above the ambient atmospheric pressure to prevent ambient atmosphere from entering enclosure 55. A safety relief valve 69 may prevent the enclosure 55 from being exposed to excessive overpressure in case of any malfunctioning of the outlet port 61 and/or a blocked exhaust filter 63. Operating staff may access the inner volume of the enclosure 55 through a door 71 that is closed during operation of the sample container filling station 51. If operating staff needs to access the inner volume of the enclosure 55 without compromising the inert gas atmosphere within the enclosure 55, the sample container filling station 51 comprises glove ports 73 preferably arranged within the door 71.

Via the valve arrangement 41, the fall pipe 17 extends into the enclosure 55 of the sample container filling station 51, so that raw material powder samples conveyed by the powder conveyor 15 can fall through the fall pipe 17 and enter the enclosure 55. A plurality of sample containers 19 is arranged on a motor-driven drum holder 75 being arranged underneath a lower end of the fall pipe 17. By rotation of the drum holder 75, one of the sample containers 19 at a time can be positioned directly underneath the fall pipe 17 for being filled with a raw material powder sample. In order to avoid dust and spillage into the enclosure 55, an actuator 77 may be activated to provide a tight connection between the sampling container 19 and the fall pipe 17 during filling of the sample container 19. A labelling device 79 may be used to label the sample container 19 with a sticker, by direct printing and/or adding an RFID tag. The sample containers 19 may already be provided with individual identification information, so that the labelling device 49 may be used to read such information data base. The glove ports 73 may be used to manually close the sample containers 19 with lids 81 before the door 71 is opened for collecting the filled sample containers 19. It is important to ensure that the raw material powder samples have an inert gas atmosphere at all times.

### List of reference numerals

- 1: additive manufacturing machine
- 3: process chamber
- 5: raw material powder supply system
- 7: inert gas flow pump
- 9, 9a,b: first/second buffer tank
- 11: sieve
- 13, 13a/b: first/second raw material powder sampling system
- 15: powder conveyor
- 15a: inside section of powder conveyor
- 15b: outside section of powder conveyor
- 17: fall pipe
- 19: sample container
- 21: inlet port of buffer tank
- 23: separator
- 25: inert gas flow exit port of buffer tank
- 27: raw material powder outlet port of buffer tank
- 29: outlet port valve
- 31: first filling level sensor
- 33: second filling level sensor
- 35: step motor
- 37: blockage sensor
- 39: filling level sensor
- 41: valve arrangement
- 43: inert gas port
- 45: inert gas supply system
- 47: inert gas supply valve
- 49: container connection monitoring system
- 51: automated sample container filling station
- 53: raw material powder supply tank
- 55: enclosure
- 57: inert gas inlet port of sample container filling station
- 59: ambient atmosphere
- 61: outlet port of sample container filling station
- 63: exhaust filter
- 65: oxygen sensor
- 67: pressure sensor
- 69: safety relieve valve
- 71: door
- 73: glove ports
- 75: drum holder
- 77: actuator
- 79: labelling device
- 81: lids

## Claims

1. A raw material powder sampling system (13, 13a, 13b) for extracting raw material powder samples from a raw material powder supply system (5) of an additive manufacturing machine (1), the raw material powder sampling system (13, 13a, 13b) comprising an powder conveyor (15) for partly extending into a buffer tank (9, 9a, 9b) of the raw material powder supply system (5), **characterised in that** the raw material powder sampling system (5) is configured to be selectively operated in a sampling mode or a cleaning mode, wherein the raw material powder sampling system (5) is configured to extract, in the sampling mode, one or more raw material powder samples from the buffer tank (9, 9a, 9b) when the powder conveyor (15) is in an immersed state in which the powder conveyor (15) is partly immersed into the raw material powder within the buffer tank (9, 9a, 9b), and wherein the raw material powder sampling system (5) is configured to move, in the cleaning mode, residual raw material powder from the powder conveyor (15) back into the buffer tank (9, 9a, 9b) when the powder conveyor (15) is in a non-immersed state in which the powder conveyor (15) is not immersed into the raw material powder within the buffer tank (9, 9a, 9b).

2. The raw material powder sampling system (13, 13a, 13b) of claim 1, wherein the powder conveyor (15) is inclined with respect to the buffer tank (9, 9a, 9b), so that a lower end of the powder conveyor (15) is, in the immersed state of the powder conveyor (15), immersed in the raw material powder within the buffer tank (9, 9a, 9b) and an upper end of the powder conveyor(15) is arranged outside of the buffer tank (9, 9a, 9b).

3. The raw material powder sampling system (13, 13a, 13b) of claim 1 or 2, wherein the powder conveyor (15) is configured to convey, in the sampling mode, in a first direction for conveying out of the buffer tank (9, 9a, 9b), and to convey, in the cleaning mode, in a second direction being opposite the first direction for conveying into the buffer tank (9, 9a, 9b).

4. The raw material powder sampling system (13, 13a, 13b) of any of the preceding claims, further comprising an inert gas port (43), wherein the inert gas port (43) is configured to guide, in the cleaning mode, an inert gas cleaning burst through the powder conveyor (15) into the buffer tank (9, 9a, 9b).

5. The raw material powder sampling system (13, 13a, 13b) of any of the preceding claims, wherein the raw material powder sampling system (13, 13a, 13b) is configured to vibrate, in the cleaning mode, the powder conveyor (15).

6. The raw material powder sampling system (13, 13a, 13b) of any of the preceding claims, further comprising a sample container filling station (51) being arranged downstream of the powder conveyor (15) for filling, in the sampling mode, at least one of the raw material powder samples into one or more sample containers (19), wherein the sample container filling station (51) is configured for automated handling and consecutive automated filling a plurality of sample containers (19).

7. An additive manufacturing machine (1) comprising:
- a process chamber (3) for selectively sintering a bed of raw material powder to additively manufacture three-dimensional objects,
- a raw material powder supply system (5) having a buffer tank (9, 9a, 9b) for buffering a supply of raw material powder to the process chamber (3), and
- a raw material powder sampling system (13, 13a, 13b) of any of the preceding claims,
wherein the powder conveyor (15) of the raw material powder sampling system (13, 13a, 13b) comprises an inside section (15a) of the powder conveyor (15) that extends into the buffer tank (9, 9a, 9b) and an outside section (15b) of the powder conveyor (15) that extends out of the buffer tank (9, 9a, 9b).

8. The additive manufacturing machine (1) of claim 7, wherein the buffer tank (9, 9a, 9b) is configured to be filled and discharged in batches, so that the powder conveyor (15) is at times in an immersed state in which the powder conveyor (15) is partly immersed into the raw material powder within the buffer tank (9, 9a, 9b) and at other times in a non-immersed state in which the powder conveyor (15) is not immersed into the raw material powder within the buffer tank (9, 9a, 9b).

9. The additive manufacturing machine (1) of claim 7 or 8, further comprising an inert gas supply system (45) for providing an inert gas atmosphere in the process chamber (3) and/or in the raw material powder supply system (5), wherein an inert gas port (43) of the raw material powder sampling system (13, 13a, 13b) is connected to the inert gas supply system (45) for guiding, in the cleaning mode, an inert gas cleaning burst through the powder conveyor (15) into the buffer tank (9, 9a, 9b).

10. A method for extracting raw material powder samples from a raw material powder supply system (5) of an additive manufacturing machine (1), the method comprising:
- filling raw material powder into a buffer tank (9, 9a, 9b) of the raw material powder supply system (5), so that an powder conveyor (15) of a raw material powder sampling system (13, 13a, 13b) is in an immersed state in which the powder conveyor (15) is partly immersed into the raw material powder within the buffer tank (9, 9a, 9b),
- operating the raw material powder sampling system (13, 13a, 13b) in a sampling mode when the powder conveyor (15) is in the immersed state, wherein one or more raw material powder samples are extracted from the buffer tank (9, 9a, 9b) by the powder conveyor (15),
- discharging raw material powder out of the buffer tank (9, 9a, 9b) of the raw material powder supply system (5), so that the powder conveyor (15) of the raw material powder sampling system (13, 13a, 13b) is in a non-immersed state in which the powder conveyor (15) is not immersed into the raw material powder within the buffer tank (9, 9a, 9b), and
- operating the raw material powder sampling system (13, 13a, 13b) in a cleaning mode when the powder conveyor (15) is in the non-immersed state, wherein residual raw material powder is moved back from the powder conveyor (15) into the buffer tank (9, 9a, 9b).

11. The method of claim 10, wherein the powder conveyor (15) is inclined with respect to the buffer tank (9, 9a, 9b), so that a lower end of the powder conveyor (15) is, in the immersed state of the powder conveyor, immersed in the raw material powder within the buffer tank (9, 9a, 9b) and an upper end of the powder conveyor (15) is arranged outside of the buffer tank (9, 9a, 9b).

12. The method of claim 10 or 11, wherein the powder conveyor (15) conveys, in the sampling mode, in a first direction for conveying the raw material powder samples out of the buffer tank (9, 9a, 9b), and conveys, in the cleaning mode, in a second direction being opposite the first direction for conveying the residual raw material powder into the buffer tank (9, 9a, 9b).

13. The method of any of the claims 10 to 12, further comprising blowing, in the cleaning mode, an inert gas cleaning burst through the powder conveyor (15) into the buffer tank (9, 9a, 9b).

14. The method of any of the claims 10 to 13, further comprising vibrating, in the cleaning mode, the powder conveyor (15).

15. The method of any of the claims 10 to 14, further comprising automatically handling and automatically consecutive filling, in the sampling mode, a plurality of sample containers (19) by a sample container filling station (51).
